# DEMANDE DE BREVET EUROPEEN

(11) **EP 4 813 602 A1**
(43) Date de publication de la demande: **30.09.2026**
(21) Numéro de dépôt: 26163914.0
(22) Date de dépôt: 11.03.2026
(51) Int. Cl.: B29C 45/14, B32B 7/12, B32B 27/08, B32B 27/10, B60R 13/00, B60R 13/02, G09F 21/04

(54) **PIÈCE DE VÉHICULE AVEC CONTRIBUTION ESTHÉTIQUE**

(30) Priorité: 26.03.2025 FR 2503124
(71) Demandeur: OPmobility SE, 69007 Lyon (FR)
(72) Inventeur: GUILLIER, Stéphane, 01150 SAINTE-JULIE (FR); BOISSON, Damien, 01150 SAINTE-JULIE (FR); MORESSEE, Aurélien, 01150 SAINTE-JULIE (FR); RABAULT, Tina, 01150 SAINTE-JULIE (FR); DUEHR, Sascha, 01150 SAINTE-JULIE (FR)
(74) Mandataire: LLR

(57) **Abrégé**

Ce procédé de fabrication d'une pièce de véhicule (2) comprend les étapes successives suivantes :
a) on prépare un film décoratif (8) en le dotant d'une première zone (10) comprenant au moins un motif décoratif et d'une seconde zone (12) comprenant une fenêtre transparente ou translucide (14) s'étendant dans toute l'épaisseur du film décoratif (8),
b) on assemble le film décoratif (8) avec un papier électronique (6) de sorte que le papier électronique (6) s'étend, au moins en partie, en regard de la fenêtre transparente ou translucide (14) du film décoratif (8),
c) on solidarise l'assemblage du film décoratif (8) et du papier électronique (6) à un substrat (4) réalisé en matière plastique.

## Description

### Domaine technique

L'invention concerne une pièce de véhicule automobile. Plus particulièrement, l'invention concerne un procédé de fabrication d'une pièce de véhicule contribuant à l'aspect du véhicule et une pièce de véhicule obtenue par la mise en œuvre d'un tel procédé.

### État de la technique

Un véhicule automobile comprend une pluralité de pièces formant sa carrosserie extérieure et participant grandement à définir l'esthétique générale du véhicule. Il est possible de traiter une surface externe de ces pièces afin d'améliorer leur aspect. On connait du document FR3099714A1 un procédé de fabrication d'une pièce de véhicule dans lequel on applique un multicouche de peinture sur une pièce transparente puis on irradie partiellement une partie du multicouche de peinture à l'aide d'un rayonnement laser afin réaliser un motif dans le multicouche de peinture laissant apparaitre partiellement la pièce transparente. Une source de lumière est alors placée derrière la pièce transparente, de sorte que le rayonnement lumineux produit par cette source de lumière est visible au travers du motif réalisé dans le multicouche de peinture.

Ce procédé permet d'améliorer l'esthétique du véhicule, mais peut présenter certains inconvénients. En effet, l'effet esthétique de la pièce de véhicule décrite ci-dessus est produit par une source de lumière, et nécessite donc une certaine consommation énergétique pour maintenir cet effet esthétique, ce que l'on souhaite éviter. En outre, le procédé tel qu'il est prévu dans le document mentionné dans ce qui précède implique de réaliser toutes les étapes en présence de la pièce transparente, de sorte que le procédé doit intégralement être mis en œuvre à un même endroit, par exemple dans la même usine, et en présence de tous les composants de la pièce de véhicule, ce qui ne permet pas une mise en œuvre agile ou souple de ce procédé.

L'invention a notamment pour but de remédier à ces problèmes en proposant un procédé de fabrication d'une pièce de véhicule contribuant à l'esthétique du véhicule qui soit plus agile ou souple à mettre en œuvre que celui de l'art antérieur, tout en réduisant l'impact énergétique de cette pièce de véhicule.

### Résumé de l'invention

À cet effet l'invention a pour objet un procédé de fabrication d'une pièce de véhicule, caractérisé en ce qu'il comprend les étapes suivantes :
a) on prépare un film décoratif en le dotant d'une première zone comprenant au moins un motif décoratif et d'une seconde zone comprenant une fenêtre transparente ou translucide s'étendant dans toute l'épaisseur du film décoratif,
b) on assemble le film décoratif avec un papier électronique de sorte que le papier électronique s'étend, au moins en partie, en regard de la fenêtre transparente ou translucide du film décoratif,
c) on solidarise l'assemblage du film décoratif et du papier électronique à un substrat moulé en matière plastique.

Ainsi, l'effet esthétique de la pièce de véhicule est notamment obtenu par le papier électronique, lequel ne nécessite pas de source de lumière comme dans la pièce de véhicule de l'art antérieur. Le papier électronique permettant l'affichage d'un texte ou d'une image sans consommer d'énergie électrique, hormis pour changer le texte ou l'image affiché(e), on comprend que la pièce de véhicule selon l'invention présente un impact énergétique beaucoup moins important que la pièce de véhicule de l'art antérieur.

En outre, étant donné que l'assemblage du film décoratif avec le papier électronique ne nécessite pas, en tant que tel, la présence du substrat comme support, on comprend que les différentes étapes du procédé selon l'invention peuvent être mises en œuvre à des endroits différents et à des moments différents. On comprend ainsi que l'invention est particulièrement agile et souple à mettre en œuvre, ce qui lui permet de s'adapter à des contraintes industrielles le cas échéant.

Avantageusement, l'assemblage du film décoratif avec le papier électronique est réalisé par laminage, par adhésivage ou par collage.

Ces méthodes permettent d'obtenir un assemblage particulièrement robuste du film décoratif avec le papier électronique, ce qui contribue à rendre la pièce de véhicule particulièrement durable.

Selon un mode de réalisation de l'invention, l'étape c) consiste à réaliser un surmoulage ou un moulage de l'assemblage du film décoratif avec le papier électronique à un substrat moulé in-situ, par exemple un moulage par injection de plastique, de préférence de polypropylène ou de polycarbonate.

Selon une variante de réalisation de l'invention, l'étape c) consiste à coller ou adhésiver l'assemblage du film décoratif avec le papier électronique sur un substrat préfabriqué, par exemple par un moulage par injection de plastique, de préférence de polypropylène ou de polycarbonate.

Le substrat peut ainsi être fabriqué avec des méthodes maitrisées, et il en est de même pour la solidarisation de l'assemblage du film décoratif et du papier électronique au substrat.

Avantageusement, on raccorde un connecteur électrique sur le papier électronique avant la mise en œuvre de l'étape b).

On installe ainsi dans la pièce de véhicule un connecteur qui permettra de connecter le papier électronique à un organe de commande permettant de modifier l'affichage du papier électronique. En d'autres termes, on facilite l'intégration à venir de la pièce de véhicule avec l'électronique du véhicule.

De préférence, le connecteur électrique ou le bord du papier électronique est placé entièrement en regard de la première zone du film décoratif sans être en regard de la fenêtre transparente ou translucide.

On permet ainsi d'occulter le connecteur électrique ou le bord du papier électronique, lesquels pourraient avoir un impact négatif sur l'esthétique de la pièce de véhicule, grâce au bord de la fenêtre transparente ou translucide.

Avantageusement, avant la mise en œuvre de l'étape c), on préforme l'assemblage du film décoratif avec le papier électronique pour que le papier électronique présente une forme plane ou incurvée dans une seule direction.

On s'affranchit ainsi d'une des contraintes d'utilisation du papier électronique, puisque ce dernier est de façon générale relativement rigide et peu apte à supporter et maintenir des déformations de forme marquées ou complexes, et fonctionne généralement moins bien lorsqu'il est déformé selon plusieurs axes.

Avantageusement, le procédé comprend en outre une étape d), après l'étape c), dans laquelle on applique un revêtement de protection transparent sur le film décoratif.

On améliore ainsi la protection de la pièce de véhicule. Il peut s'agir par exemple d'un revêtement de protection assurant une protection mécanique de la pièce de véhicule, par exemple vis-à-vis d'éraflures, ou bien assurant une protection optique de la pièce de véhicule, par exemple vis-à-vis du rayonnement ultraviolet du soleil.

Avantageusement, la pièce de véhicule est une pièce de carrosserie de véhicule.

Avantageusement, la pièce de carrosserie de véhicule forme une partie d'un hayon, d'un pare-choc d'une portière de véhicule, ou toute pièce d'habillage décoratif du véhicule.

La pièce de véhicule contribue ainsi à l'esthétique du véhicule.

On prévoit également selon l'invention une pièce de véhicule comprenant :
- un film décoratif présentant une première zone comprenant au moins un motif décoratif et une seconde zone comprenant une fenêtre transparente ou translucide s'étendant dans toute l'épaisseur du film décoratif,
- un papier électronique assemblé avec le film décoratif, le papier électronique s'étendant, au moins en partie, en regard de la fenêtre transparente ou translucide du film décoratif, et
- un substrat réalisé en matière plastique moulée sur lequel est solidarisé l'assemblage du film décoratif et du papier électronique.

Avantageusement, la pièce de véhicule comprend en outre un revêtement de protection transparent appliqué sur le film décoratif.

Avantageusement, la pièce de véhicule est une pièce de carrosserie de véhicule, par exemple une partie d'un hayon, d'un pare-choc, d'une portière de véhicule ou toute pièce d'habillage décoratif du véhicule.

### Brève description des figures

L'invention sera mieux comprise à la lecture de la description qui va suivre donnée uniquement à titre d'exemple et faite en se référant aux dessins annexés dans lesquels :
La [Fig. 1] est une vue en section droite d'une pièce de véhicule selon un mode de réalisation de l'invention,
La [Fig. 2] est une vue en section droite de l'assemblage d'un film décoratif avec un papier électronique de la pièce de véhicule de la figure 1, et
La [Fig. 3] est une vue en section droite d'une pièce de véhicule selon une variante de réalisation de l'invention.

### Description détaillée

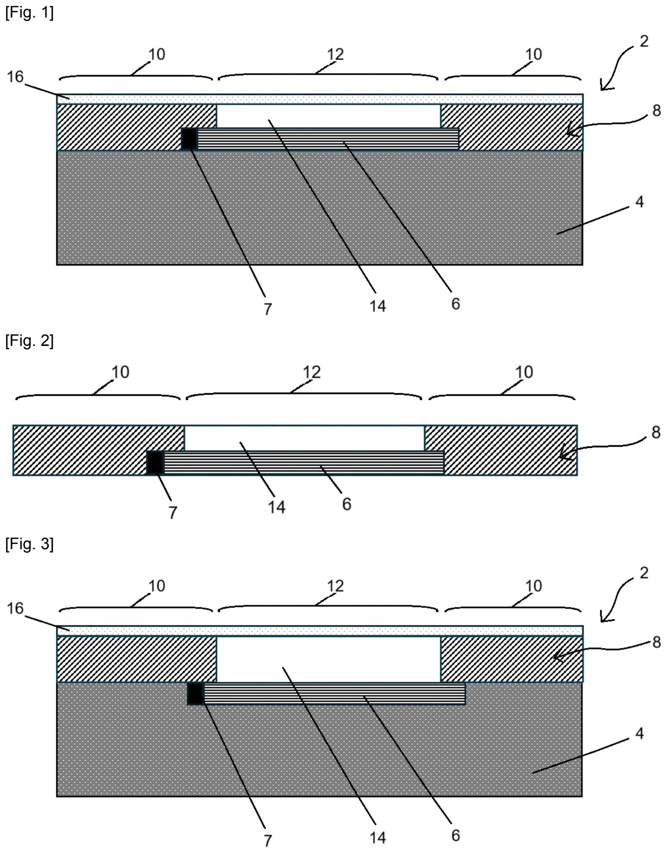

On a représenté en figure 1 une pièce de véhicule 2 selon un mode de réalisation de l'invention. Il s'agit ici d'une pièce de carrosserie de véhicule, telle qu'une partie d'un hayon ou d'une portière de véhicule, bien qu'on puisse prévoir qu'il s'agisse d'un tout autre type de pièce de véhicule.

La pièce de véhicule 2 comprend un substrat 4 réalisé dans une matière plastique. Ici, le substrat est réalisé en polycarbonate (PC) ou en polypropylène (PP), pour ne citer que quelques exemples, qui sont des plastiques qui peuvent facilement être moulés par injection.

La pièce de véhicule 2 comprend un papier électronique 6 solidarisé au substrat 4. Le papier électronique 6 est configuré pour afficher du texte et/ou des images, lequel pouvant être modifiés par l'application d'une tension électrique momentanée. Il s'agit de la même technologie qui équipe les liseuses électroniques. À cet effet, la pièce de véhicule 2 comprend un connecteur électrique 7 connecté au papier électronique 6 et configuré pour être connecté à un organe de commande électrique (non représenté) situé hors de la pièce de véhicule 2.

La pièce de véhicule 2 comprend un film décoratif 8 solidarisé au papier électronique 6 et au substrat 4, le film décoratif 8 recouvrant intégralement le papier électronique 6.

La figure 2 illustre le papier électronique 6, le connecteur électrique 7 et le film décoratif 8 isolés des autres éléments de la pièce de véhicule 2. Le film décoratif 8 comprend une première zone 10, ici opaque, comprenant au moins un motif décoratif, par exemple à base de peinture ou autre matière. La première zone 10 comprend par exemple une peinture opaque unie, avec éventuellement des formes, logos, ou écritures, colorées ou non, permettant une présentation d'informations sur le véhicule ou apportant une contribution à l'esthétique du véhicule. Le film décoratif 8 comprend une seconde zone 12 comprenant une fenêtre transparente 14, s'étendant sur toute l'épaisseur du film décoratif 8, à travers de laquelle au moins une portion du papier électronique 6 est visible depuis d'extérieur. La seconde zone 12 du film décoratif 8 ne comporte donc pas de matière opaque. Selon une variante de réalisation, la fenêtre 14 est translucide au lieu d'être transparente La forme de la fenêtre transparente 14 est ici choisie pour être inscrite dans la forme du papier électronique 6, de sorte que des bords du papier électronique 6 sont au moins en partie occultés par les bords de la fenêtre transparente 14. En particulier, le connecteur 7 est ici occulté par les bords de la fenêtre transparente 14. Dans ce mode de réalisation, le papier électronique 6 se retrouve logé dans l'épaisseur du film décoratif 8.

La pièce de véhicule 2 comprend en outre un revêtement de protection 18 appliqué sur le film décoratif 8. Le revêtement de protection 16 est transparent. Il peut s'agir par exemple d'un revêtement de protection, comme un vernis, assurant une protection mécanique de la pièce de véhicule, par exemple vis-à-vis d'éraflures, ou bien assurant une protection optique de la pièce de véhicule, par exemple vis-à-vis du rayonnement ultraviolet du soleil.

Parallèlement à un axe d'empilement, vertical sur la figure 1, la pièce de véhicule 2 comprend dans la première zone 10 les couches successives suivantes : substrat 4, en partie le bord du papier électronique 6, film décoratif 8, revêtement de protection 16. Et, parallèlement à l'axe d'empilement, la pièce de véhicule 2 comprend dans la seconde zone 12 les couches successives suivantes : substrat 4, papier électronique 6, fenêtre transparente 14 du film décoratif 8, revêtement de protection 16.

On va maintenant décrire un procédé de fabrication de la pièce de véhicule 2 selon un mode de réalisation de l'invention.

Selon ce procédé de fabrication, on commence par mettre en œuvre une étape a) lors de laquelle on prépare le film décoratif 8 en le dotant de la première zone 10 comprenant l'au moins un motif décoratif et de la seconde zone 12 comprenant la fenêtre transparente 14 s'étendant sur toute l'épaisseur du film décoratif 8. On réalise cette fenêtre transparente 14 dans le film décoratif 8 par gravure laser, découpe ou masquage. On rapporte ensuite le papier électronique 6 sur le film décoratif 8 et on le place en regard de la fenêtre transparente 14, puis on raccorde le connecteur électrique 7 sur le papier électronique 6.

On met ensuite en œuvre une étape b) lors de laquelle on assemble le film décoratif 8 avec le papier électronique 6 de sorte que le papier électronique 6 s'étend, au moins en partie, en regard de la fenêtre transparente 14 du film décoratif 8. Cet assemblage est réalisé par laminage, par adhésivage ou par collage, de sorte que le papier électronique 6 et le connecteur électrique 7 sont solidarisés avec le film décoratif 8. On obtient alors un assemblage tel qu'illustré sur la figure 2. En outre, on préforme l'assemblage du film décoratif 8 avec le papier électronique 6 pour que le papier électronique 6 présente une forme plane ou une forme incurvée dans une seule direction. Cela permet de s'assurer que le papier électronique 6, et donc la pièce de véhicule 2, fonctionne de manière optimale à la fin de la mise en œuvre du procédé de fabrication.

On met ensuite en œuvre une étape c) lors de laquelle on solidarise l'assemblage du film décoratif 8 et du papier électronique 6 avec le substrat 4. Selon un mode de réalisation de l'invention, l'étape c) consiste à réaliser un surmoulage ou un moulage avec insert de l'assemblage du film décoratif 8 avec le papier électronique 6 dans un moule à injection dans lequel le matériau constitutif du substrat 4, tel que du polycarbonate ou du polypropylène, est injecté. Selon une variante de réalisation, l'étape c) consiste à coller l'assemblage du film décoratif 8 avec le papier électronique 6 sur un substrat 4, préfabriqué ou fabriqué lors de l'étape c) indépendamment du collage de l'assemblage sur le substrat 4. Dans cette étape c), la forme du substrat 4 est choisie pour qu'il forme une pièce de carrosserie, en l'occurrence une partie d'un hayon ou d'une portière de véhicule comme mentionné plus haut.

On met finalement en œuvre une étape d) lors de laquelle on applique le revêtement de protection 16 transparent sur le film décoratif 8 pour obtenir la pièce de véhicule.

On a représenté en figure 3 une pièce de véhicule 2 selon une variante de réalisation de l'invention. Cette pièce de véhicule 2 diffère de celle du précédent mode de réalisation en ce que le papier électronique 6 se retrouve logé dans un épaulement du substrat 4, au lieu d'un épaulement du film décoratif 8. Les éléments constitutifs de cette pièce de véhicule 2, ainsi que son procédé de fabrication, sont similaires à ceux de la pièce de véhicule du précédent mode de réalisation décrit dans ce qui précède.

L'invention n'est pas limitée aux modes de réalisation présentés et d'autres modes de réalisation apparaîtront clairement à l'homme du métier.

### Liste de références

2 : pièce de véhicule
4 : substrat
6 : papier électronique
7 : connecteur électrique
8 : film décoratif
10 : première zone
12 : seconde zone
14 : fenêtre transparente ou translucide
16 : revêtement de protection

## Revendications

1. Procédé de fabrication d'une pièce de véhicule (2), **caractérisé en ce qu'**il comprend les étapes suivantes :
a) on prépare un film décoratif (8) en le dotant d'une première zone (10) comprenant au moins un motif décoratif et d'une seconde zone (12) comprenant une fenêtre transparente ou translucide (14) s'étendant dans toute l'épaisseur du film décoratif (8),
b) on assemble le film décoratif (8) avec un papier électronique (6) de sorte que le papier électronique (6) s'étend, au moins en partie, en regard de la fenêtre transparente ou translucide (14) du film décoratif (8),
c) on solidarise l'assemblage du film décoratif (8) et du papier électronique (6) à un substrat (4) moulé en matière plastique.

2. Procédé selon la revendication précédente, dans lequel l'assemblage du film décoratif (8) avec le papier électronique (6) est réalisé par laminage, adhésivage ou par collage.

3. Procédé selon la revendication 1 ou 2, dans lequel l'étape c) consiste à réaliser un surmoulage ou un moulage de l'assemblage du film décoratif (8) avec le papier électronique (6) à un substrat (4) moulé, par exemple un moulage par injection de plastique, de préférence de polypropylène ou de polycarbonate.

4. Procédé selon la revendication 1 ou 2, dans lequel l'étape c) consiste à coller ou adhésiver l'assemblage du film décoratif (8) avec le papier électronique (6) sur un substrat préfabriqué, par exemple par un moulage par injection de plastique, de préférence de polypropylène ou de polycarbonate.

5. Procédé selon l'une quelconque des revendications précédentes, dans lequel on raccorde un connecteur électrique (7) sur le papier électronique (6) avant la mise en œuvre de l'étape b).

6. Procédé selon la revendication précédente, dans lequel le connecteur électrique (7) ou le bord du papier électronique (6) est placé entièrement en regard de la première zone (10) du film décoratif sans être en regard de la fenêtre transparente ou translucide (14).

7. Procédé selon l'une quelconque des revendications précédentes, dans lequel avant la mise en œuvre de l'étape c), on préforme l'assemblage du film décoratif (8) avec le papier électronique (6) pour que le papier électronique (6) présente une forme plane ou incurvée dans une seule direction.

8. Procédé selon l'une quelconque des revendications précédentes, comprenant en outre une étape d) dans laquelle on applique, après l'étape c), un revêtement de protection (16) transparent ou translucide sur le film décoratif (8).

9. Procédé selon l'une quelconque des revendications précédentes, dans lequel la pièce de véhicule (2) est une pièce de carrosserie de véhicule.

10. Procédé selon la revendication précédente, dans lequel la pièce de carrosserie de véhicule forme une partie d'un hayon, d'un pare-choc, d'une portière de véhicule, ou toute pièce d'habillage décoratif du véhicule.

11. Pièce de véhicule (2), **caractérisée en ce qu'**elle comprend :
- un film décoratif (8) présentant une première zone (10) comprenant au moins un motif décoratif et une seconde zone (12) comprenant une fenêtre transparente ou translucide(14) s'étendant dans toute l'épaisseur du film décoratif (8),
- un papier électronique (6) assemblé avec le film décoratif (8), le papier électronique (6) s'étendant, au moins en partie, en regard de la fenêtre transparente ou translucide (14) du film décoratif (8), et
- un substrat (4) réalisé en matière plastique moulée sur lequel est solidarisé l'assemblage du film décoratif (8) et du papier électronique (6).

12. Pièce de véhicule (2) selon la revendication précédente, comprenant en outre un revêtement de protection (16) transparent ou translucide appliqué sur le film décoratif (8).

13. Pièce de véhicule (2) selon la revendication 11 ou 12, la pièce de véhicule (2) étant une pièce de carrosserie de véhicule, par exemple une partie d'un hayon, d'un pare-choc, d'une portière de véhicule, ou toute pièce d'habillage décoratif du véhicule.
